# EUROPEAN PATENT SPECIFICATION

(11) **EP 3 674 494 B1**
(45) Date of publication and mention of the grant of the patent: **04.08.2021**
(21) Application number: 20150088.1
(22) Date of filing: 02.01.2020
(51) Int. Cl.: E04B 1/00, E02D 27/48, E04B 1/76, E02D 27/01, E02D 27/02

(54) **A METHOD FOR INSULATING A GROUND FLOOR OF A BUILDING**
VERFAHREN ZUR ISOLIERUNG EINES ERDGESCHOSSES EINES GEBÄUDES
PROCÉDÉ PERMETTANT D'ISOLER UN PLANCHER DE BÂTIMENT

(30) Priority: 28.12.2018 NL 2022323
(43) Date of publication of application: 01.07.2020
(73) Proprietor: Takkenkamp Innovatie B.V., 7021 BZ Zelhem (NL)
(72) Inventor: Takkenkamp, Rick Gerben, 7021 BX Zelhem (NL)
(74) Representative: Adamczyk, Kolja

(56) References cited:
- EP-A2- 2 553 176
- GB-A- 2 428 698
- JP-A- H11 256 596

## Description

### Field of Invention

The field of the invention relates to a method for insulating a ground floor of a building, the ground floor being supported on soil.

### Background

The desire to insulating parts of an existing building after the building has been constructed is commonly known. The known building comprising a ground floor, which is supported on soil, a front exterior wall, a back exterior wall, side exterior walls, optionally one or more storeys, each storey having a floor, and a roof. The floor, which is the ground floor, extends between exterior walls, such as between the front exterior wall and the back exterior wall. The exterior walls extend into the ground in order to anchor the building. The ground floor is directly supported on soil, which may contain at least one of earth, sand, clay and a like soil material. The ground floor contains commonly a base layer of concrete, including a floor covering, such as a wooden layer, a layer of tiles, a resilient floor layer, such as PVC layer, a casted polymer layer or a floor screed containing a cementitious material, provided on top of the base layer.

The building may loose considerable energy through its ground floor, which is supported on soil, to the underlying soil, when the building is heated. Therefore, a desire exists to reduce energy loss of the building through its ground floor.

In order to reduce the energy loss of the building at the ground floor an insulating material needs to be placed on top or below the base layer of the ground floor. In case the insulating material is placed on top of the base layer of the ground floor, the floor covering needs to be temporarily removed, and the upper level of the floor is raised, which may run into problems of opening doors.

In any way, the thickness of the insulating material is restricted. In case the insulating material is placed below the base layer, the ground floor, including the base layer needs to be removed and be reconstructed after providing the insulating material. This requires a lot of reconstruction activities. In any way the ground floor of the building must be emptied in order to access the ground floor for placing the insulating material.

Moreover, a desire exists to provide a method for insulating a ground floor of an existing building, the ground floor being supported on soil, wherein the method provides a simple and fast means for insulating the ground floor of the building. EP 2 553 176 A2 discloses a method for insulating a ground floor of a building, the ground floor being supported on soil, the method comprising removing soil at locations below the ground floor thereby forming a plurality of tunnels below the ground floor and providing an insulating material in each of the tunnels.

### Summary

According to a first aspect of the invention there is provided a method for insulating a ground floor of a building, the ground floor being supported on soil, the method comprising the steps of:
a. Removing soil, which is arranged for supporting the ground floor, at first locations below respective first area parts of the ground floor, wherein the first area parts are spaced apart from one another in a first direction, thereby forming a plurality of first tunnels below the ground floor;
b. Providing an insulating material in each of the first tunnels;
c. Removing soil, which is arranged for supporting the ground floor, at second locations below respective second area parts of the ground floor, wherein the second area parts are spaced apart from one another in the first direction, thereby forming a plurality of second tunnels below the ground floor; wherein the second locations are different from the first locations in the first direction;
d. Providing an insulating material in each of the second tunnels;
wherein the steps a. and b. are carried out before step c.

In the removing step a. soil is removed only at first locations below respective first area parts of the ground floor. The first area parts are spaced apart from one another in a first direction, which may be a lateral direction of the ground floor. By removing the soil at the first locations corresponding first tunnels are formed. As such, after step a. the ground floor remains supported by soil present between the first locations (i.e. between the first tunnels). The number of first tunnels is at least two and may be any suitable number larger than two.
Preferably, the first area parts are spaced apart from one another at a predetermined distance in the first direction. As such, the corresponding first locations of the first tunnels have said predetermined distance between one another in the first direction. The predetermined distance is selected to be at least a minimum distance for supporting the ground floor by soil, which is present between the first locations (i.e. between the first tunnels).

In step b. in each of the first tunnels an insulating material is provided. Step b. may be carried out after the forming of all first tunnels in step a. Alternatively, each first tunnel, formed in step a., may be directly provided with an insulating material (according to step b.), before forming another first tunnel (according to step a.).

In the removing step c. soil is removed only at second locations below respective second area parts of the ground floor. The second area parts are spaced apart from one another in the first direction, which may be the lateral direction of a ground floor. By removing the soil at the second locations corresponding second tunnels are formed. The second locations are different from the first locations in the first direction. As such, the locations of the second tunnels are different from the first tunnels. After step c. the ground floor remains supported by soil and/or the insulating material present between the second locations (i.e. between the second tunnels). The number of second tunnels is at least two and may be any suitable number larger than two.
Preferably, the second area parts are spaced apart from one another at a predetermined distance in the first direction. In a particular embodiment, the predetermined distance between the first locations of first tunnels, which are adjacent to one another, is substantially the same to the predetermined distance between the second locations of second tunnels, which are adjacent to one another.

In step d. in each of the second tunnels an insulating material is provided. After the steps a. - d. the insulating material is present at the first locations and the second locations below the ground floor.

In an exemplary embodiment, the insulating material is a thermal insulating material. Said thermal insulating material is configured for restricting thermal conductivity. In particular embodiments, said thermal insulating material has a thermal conductivity lambda value λ, which is determined in agreement to NEN 1068, and expressed in W.m⁻¹.K⁻¹, which is smaller than 0.200 W.m⁻¹.K⁻¹, preferably smaller than 0.100 W.m⁻¹.K⁻¹, more preferably in the range of 0.060 W.m⁻¹.K⁻¹ - 0.020 W.m⁻¹.K⁻¹. In a particular example, a polyurethane foam is used having a thermal conductivity lambda value λ of about 0.040 - 0.050 W.m⁻¹.K⁻¹. Said polyurethane foam may be provided to substantially fill the tunnels. The polyurethane foam is configured to support the ground floor at the respective locations, when provided inside the respective tunnels.
In an exemplary embodiment, the thermal insulating material arranged to extend over said respective area parts of the ground floor, which corresponds to the locations of the tunnels. In this way a thermal conductivity between the ground floor and the soil below the tunnels, which contain the thermal insulating material, is retricted.

In an alternative exemplary embodiment, the insulating material is a seismic insulating material.

Each of the respective tunnels may have any suitable dimension and/or shape for accommodating an insulating material. In exemplary embodiments, the tunnel may be a channel, may be a recess, may be a hole and may have any suitable dimensions. In preferred embodiments, each of the tunnels extends in a longitudinal direction. In particular embodiments, the longitudinal direction of each tunnel is arranged substantially parallel to one another. In particular embodiments, the longitudinal direction of each tunnel is arranged substantially perpendicular to the first direction.

In an exemplary embodiment, the predetermined distance between the first locations of first tunnels, which are adjacent to one another, is substantially the same to a width in the first direction of the second tunnel, which is formed between the adjacent first tunnels. Preferably, the predetermined distance is between 200 mm and 600 mm in the first direction, preferably between 200 mm and 300 mm, more preferably about 250 mm.
In an exemplary embodiment, the first locations and the second locations are arranged adjacent to one another, thereby cooperatively spanning the ground floor in the first direction. In particular, the first locations and the second locations are arranged alternating one another in the first direction. In this way, using a minimum number of tunnels, the area below the ground floor may be insulated by providing the insulating material in the respective tunnels. In this embodiment, the first tunnels and the second tunnels alternate one another, thereby cooperatively spanning the ground floor in the first direction.

In alternative embodiments, the ground floor contains third area parts arranged adjacent to at least one area part of the first area parts and the second area parts in the first direction, which third area parts are not covered by any one of the first area parts and the second area parts. In that case, the method may comprise further steps of: removing soil, which is arranged for supporting the ground floor, at third locations below respective third area parts of the ground floor, wherein the third area parts are spaced apart from one another in the first direction, thereby forming a plurality of third tunnels below the ground floor; wherein the third locations are different from the first locations and the second locations in the first direction; and providing an insulating material in each of the third tunnels.
In alternatively embodiments, the ground floor contains one third area part arranged adjacent to at least one of the first area parts and the second area parts in the first direction, which is not covered by any one of the first area parts and the second area parts.

In an exemplary embodiment, the insulating material provided in the respective tunnel is arranged for supporting the ground floor at the respective location. The insulating material is selected to be sufficiently strong to support the ground floor at the respective locations. Preferably, the insulating material is provided in the respective tunnels in such a way to substantially fill the respective tunnels. In an example, the insulating material is insulating pressure resistant foam, which is injected into the respective tunnel. The insulating foam may be injected to extend over substantially the whole depth and/or length of the tunnel to support the ground floor at the respective location above the tunnel.

In an exemplary embodiment, the first tunnels and the second tunnels are extending in a second direction, which is substantially perpendicular to the first direction. The second direction may be arranged parallel to a longitudinal direction of the respective tunnel. A longitudinal direction is defined as a longest dimension direction of the tunnel.

The steps a. and b. are carried out before step c. In this way, in each of the first tunnels an insulating material is provided, before forming the second tunnels.

In an exemplary embodiment, the first area parts and the second area parts are arranged contiguous to one another in the first direction. In this way, the first area parts and the second area parts may cooperatively span at least a part of the ground floor in the first direction. As such, the insulating material provided in the first tunnels and the second tunnels may span and insulate the ground floor over the first direction.

In an exemplary embodiment, the method further comprising the steps of:
e. Removing soil, which is arranged for supporting the ground floor, at third locations below respective third area parts of the ground floor, wherein the third area parts are spaced apart from one another in the first direction, thereby forming a plurality of third tunnels below the ground floor;
f. Providing an insulating material in each of the third tunnels;
g. Removing soil, which is arranged for supporting the ground floor, at fourth locations below respective fourth area parts of the ground floor, wherein the fourth area parts are spaced apart from one another in the first direction, thereby forming a plurality of fourth tunnels below the ground floor; wherein the third locations are different from the fourth locations in the first direction;
h. Providing an insulating material in each of the fourth tunnels,
wherein the steps e. and f. are carried out before step g.
Each of the third locations and the fourth locations may be arranged between first locations and second locations in the first direction. Alternatively, teach of the third locations and the fourth locations may be arranged offset from the first locations and second locations in a second direction, which is substantially perpendicular to the first direction.

In an exemplary embodiment, the third area parts and the fourth area parts are arranged contiguous to one another in the first direction.

In an exemplary embodiment, the first area parts and the second area parts together form a front side floor area (F) and the third area parts and the fourth area parts together form a back side floor area (B), wherein the front side floor area (F) is arranged contiguous to the back side floor area (B). Preferably, the front side floor area is arranged adjacent to a front exterior wall and the back side floor area is arranged adjacent to a back exterior wall.

In an exemplary embodiment, each of the tunnels is arranged at a level (in a height direction) arranged between the front exterior wall and the back exterior wall and the thermal insulating material is provided inside the tunnels at said level between the front exterior wall and the back exterior wall. Preferably, the tunnels including the thermal insulating material are arranged close to the ground floor in the height direction. This position enhances the thermal insulating of the ground floor.

In an exemplary embodiment, each of the third tunnels is arranged in an extension direction of the second tunnels and each of the fourth tunnels is arranged in an extension direction of the first tunnels.

In an exemplary embodiment, the steps a. and b. are carried out before steps e. and f., which are carried out before steps c. and d., which are carried out before steps g. and h.

In an exemplary embodiment, the building has a front exterior wall and a back exterior wall, the ground floor extending between the front exterior wall and the back exterior wall in a second direction, which is substantially perpendicular to the first direction, wherein the method further comprises the steps of providing holes at predetermined locations in the front exterior wall and / or at predetermined locations in the back exterior wall to provide access to the soil, which is arranged for supporting the ground floor, at respective locations below corresponding area parts of the ground floor.

In an exemplary embodiment, the tunnel is formed by moving a ground suction hose of a ground suction device though a respective hole of the front exterior wall or the back exterior wall and moving the ground suction hose beneath the ground floor along a second direction, perpendicular to the first direction, while the ground suction device is arranged for removing soil.

In an exemplary embodiment, the method further comprises at least one of the steps of excavating a hole adjacent to the front exterior wall to provide access to the front exterior wall below the ground level and excavating a hole adjacent to the back exterior wall to provide access to the back exterior wall below the ground level. Preferably, the excavating step is carried out before the corresponding steps of removing soil at the respective locations (a., c., e. and /or g.).

In an exemplary embodiment, the soil is removed at the respective locations by using a ground suction device.

In an exemplary embodiment, the insulating material is provided by injecting a foam material into the respective tunnel. The insulating material may be a pressure resistant foam, such as a pressure resistant polyurethane (PUR) foam. Pressure resistant polyurethane (PUR) foams are generally known.

In an exemplary embodiment, each of the respective tunnels has a width between 200 mm and 600 mm in the first direction, preferably between 200 mm and 300 mm, more preferably about 250 mm, optionally each of the respective tunnels has a depth between 200 mm and 600 mm, preferably between 300 mm and 500 mm, more preferably about 400 mm, and optionally each of the respective tunnels has a length in the second direction of at most 6000 mm, preferably at most 4500 mm

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1A illustrates schematically a front view of a building;
Figure 1B illustrates schematically a back view of the building;
Figure 1C illustrates schematically a plane view on the ground floor of the building;
Figure 2 illustrates schematically a flow diagram of a method for insulating a ground floor of a building shown in FIG. 1A - 1C;
FIG. 3A illustrates schematically a front view of a building before step S30;
FIG. 3B illustrates schematically a plane view on the ground floor of the building after step S30;
FIG. 3C illustrates schematically a back view of a building before step S130;
FIG. 3D illustrates schematically a plane view on the ground floor of the building after step S130;
FIG. 3E illustrates schematically a front view of a building before step S230;
FIG. 3F illustrates schematically a plane view on the ground floor of the building after step S230;
FIG. 3G illustrates schematically a back view of a building before step S330;
FIG. 3H illustrates schematically a plane view on the ground floor of the building after step S330;
FIG. 4A illustrates schematically a detailed cross section view of the ground floor and an exterior wall in a first stage;
FIG. 4B illustrates schematically a detailed cross section view of the ground floor and an exterior wall in a second stage;
Figure 5 illustrates schematically another flow diagram of a method for insulating a ground floor of a building shown in FIG. 1A - 1C.

### Description of embodiments

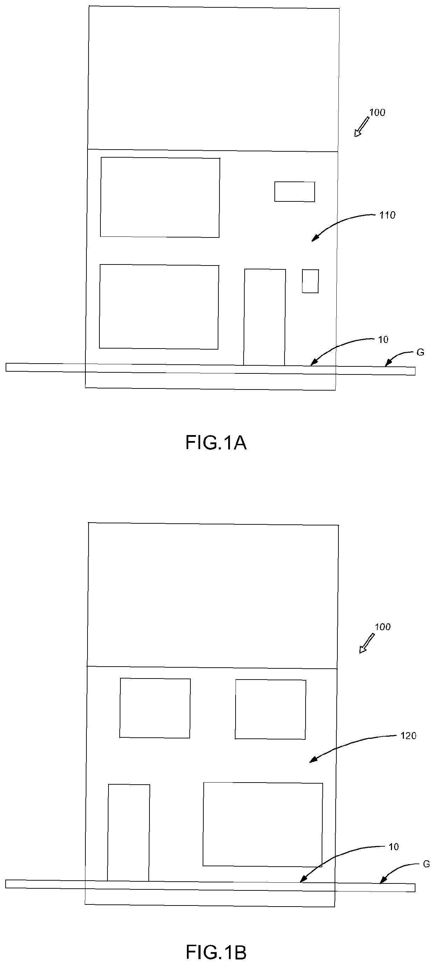

Figure 1A illustrates schematically a front side view of a building. The building 100 has a front exterior wall 110 and a ground floor 10. The ground floor 10 is at ground level G in a height direction. The ground floor 10 is supported on soil. The front exterior wall 110 extends into the soil for anchoring the building 100.

Figure 1B illustrates schematically a back side view of the building. The building 100 has a back exterior wall 120. The ground floor 10 is shown at ground level G in a height direction. The back exterior wall 120 extends into the soil for anchoring the building 100.

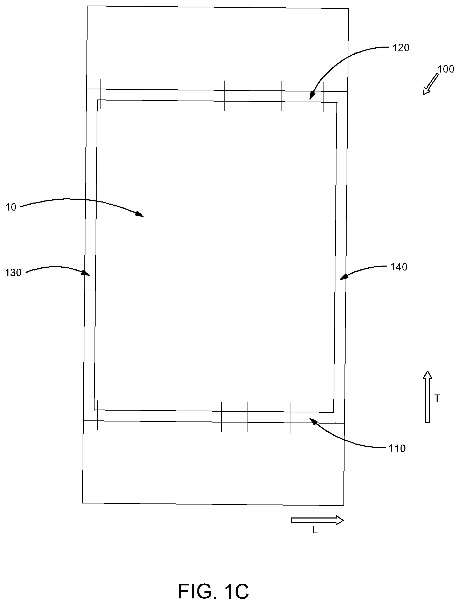

Figure 1C illustrates schematically a plane view on the ground floor of the building. The ground floor 100 extends between the front exterior wall 110 and the back exterior wall 120 in a second direction T and extends between two side walls 130, 140 in a first, lateral L, direction. The whole area of the ground floor 100 may be supported on soil.

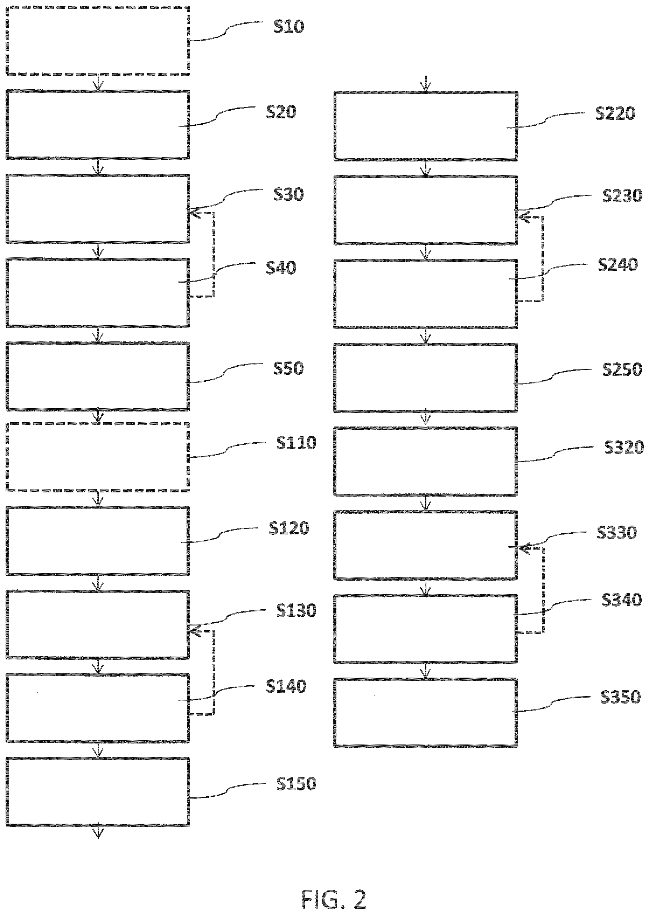

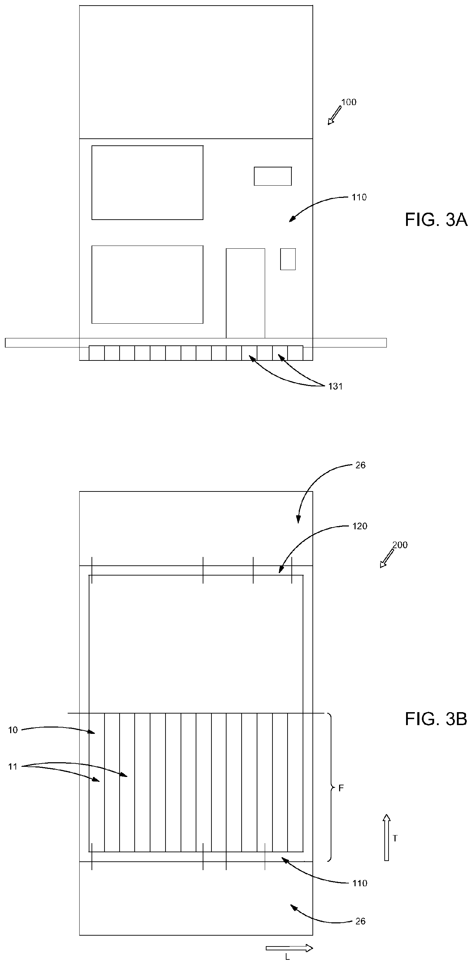

Figure 2 illustrates schematically a flow diagram of a method for insulating a ground floor of a building shown in FIG. 1A - 1C.
Step S10 of the method is excavating a hole 26 adjacent to the front exterior wall 110 to provide access to the front exterior wall 110 below ground level G. Step 10 is optional. In case front exterior wall 110 is already accessible below ground level G, the step S10 does not need to be performed. The hole 26 may be about 600 mm deep at the front exterior wall 110 and about 2000 mm in width.
Step S20 is providing holes 131 in the front exterior wall 110 at selected locations to provide access to the soil below the ground floor 10, as shown in FIG. 3A. The holes 131 are spaced apart from each other in the first direction L at a predetermined distance. The holes 131 may have a size of about 400 mm in diameter.

Step S30 is removing soil 20, which is arranged for supported the ground floor 10, at first locations below respective first area parts 11 of the ground floor, as shown in FIG. 3B, thereby forming a plurality of corresponding first tunnels 21. The first tunnels 21 are located below the ground floor 10 at the respective first area parts 11 of the ground floor. The first area parts 11, and the first tunnels 21, are spaced apart from each other in the first direction L at a predetermined distance. The predetermined distance preferably corresponds to the predetermined distance between the holes 131. Preferably, the respective tunnels 21 are arranged substantially parallel to one another. Preferably, the respective tunnels 21 have a longitudinal length which is about half a length of the ground floor 10 in the second direction T.
Step S40 is providing an insulating material 30 in each of the first tunnels 21. The insulating material may be a thermal insulating foam material, such as PUR foam, which is injected into the tunnel 21. Alternatively, the insulating material 30 may be any other suitable thermal insulating material.
The insulating material inside the first tunnel 21 is provided to support the ground floor at the respective area part of the ground floor 11.

Step S40 may be performed after forming all tunnels in step S30. Alternatively, Steps S30 and S40 may be performed tunnelwise for each tunnel; thus step S40 after forming the respective tunnel according to step S30 and before forming another tunnel according to step S30.
Step S50 is the closing of the holes 131 of the front exterior wall 110, optionally including providing an insulating material inside a recess of the front exterior wall 110 near the location of the holes 131.

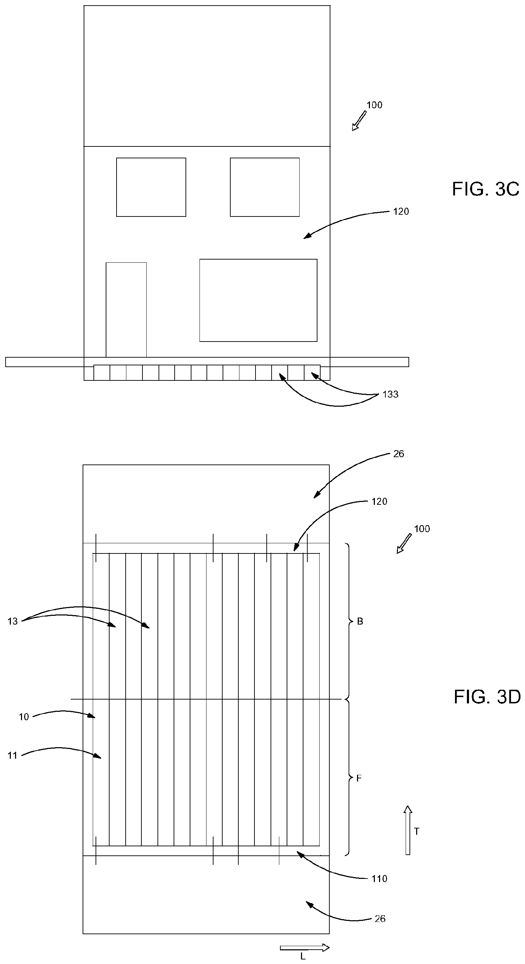

Step S110 of the method is excavating a hole 26 adjacent to the back exterior wall 120 to provide access to the back exterior wall 120 below ground level G. Step 110 is optional. In case back exterior wall 120 is already accessible below ground level G, the step S110 does not need to be performed. The hole 26 may be about 600 mm deep at the back exterior wall 120 and about 2000 mm in width.
Step S120 is providing holes 133 in the back exterior wall 120 at selected locations to provide access to the soil below the ground floor 10, as shown in FIG. 3C. The holes 133 are spaced apart from each other in the first direction L at a predetermined distance. The holes 133 may have a size of about 400 mm in diameter.
Step S130 is removing soil 20, which is arranged for supported the ground floor 10, at third locations below respective third area parts 13 of the ground floor, as shown in FIG. 3D, thereby forming a plurality of corresponding third tunnels 23. The third tunnels 23 are located below the ground floor 10 at the respective third area parts 13 of the ground floor. The third area parts 13, and the third tunnels 23, are spaced apart from each other in the first direction L at a predetermined distance. The predetermined distance preferably corresponds to the predetermined distance between the holes 133. Preferably, the respective tunnels 23 are arranged substantially parallel to one another. Preferably, the respective tunnels 23 have a longitudinal length which is about half a length of the ground floor 10 in the second direction T.
Step S140 is providing an insulating material 30 in each of the third tunnels 23. The insulating material may be an insulating foam material, such as PUR foam, which is injected into the tunnel 23. Alternatively, the insulating material 30 may be any other suitable material. The insulating material inside the third tunnel 23 is provided to support the ground floor at the respective area part of the ground floor 13.

Step S140 may be performed after forming all tunnels in step S130. Alternatively, Steps S130 and S140 may be performed tunnelwise for each tunnel; thus step S140 after forming the respective tunnel according to step S130 and before forming another tunnel according to step S130.
Step S150 is the closing of the holes 133 of the back exterior wall 120, optionally including providing an insulating material inside a recess of the back exterior wall 120 near the location of the holes 133.

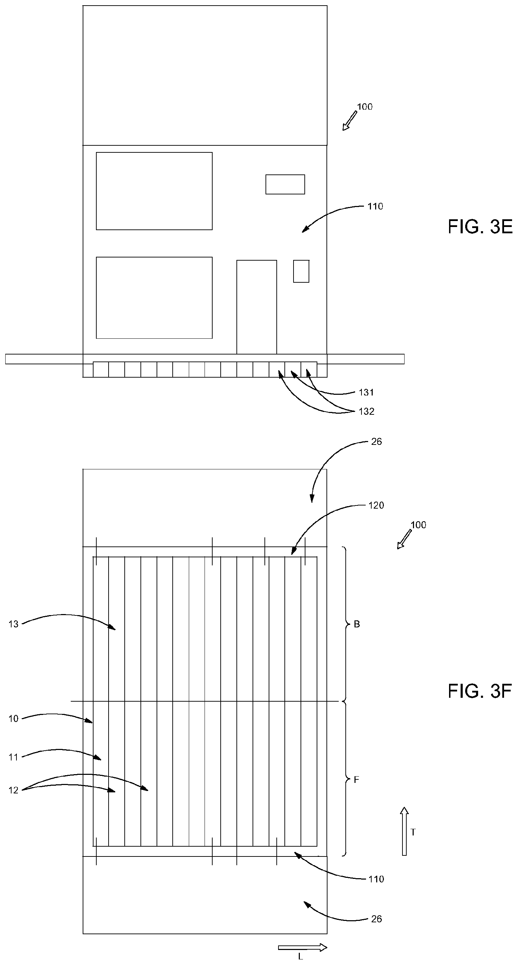

Step S220 is providing holes 132 in the front exterior wall 110 at selected locations to provide access to the soil below the ground floor 10, as shown in FIG. 3E. The holes 132 are spaced apart from each other in the first direction L at a predetermined distance. The holes 132 may have a size of about 400 mm in diameter. The holes 132 are at a different location then the holes 131 of step S20. Preferably, the holes 132 and the holes 131 are arranged in an alternating sequence to one another in the first direction L.
Optionally, Step S220 may be performed substantially at the same time as Step S20 and before steps S30 - S50. Preferably, step S220 is performed after steps S30 - S50 to prevent an incorrect order of selecting locations to remove soil under the ground floor 10.
Step S230 is removing soil 20, which is arranged for supported the ground floor 10, at second locations below respective second area parts 12 of the ground floor, as shown in FIG. 3F, thereby forming a plurality of corresponding second tunnels 22. The second tunnels 22 are located below the ground floor 10 at the respective second area parts 12 of the ground floor. The second area parts 12, and the second tunnels 22, are spaced apart from each other in the first direction L at predetermined distance. The predetermined distance preferably corresponds to the predetermined distance between the holes 132. Preferably, the respective tunnels 22 are arranged substantially parallel to one another. The second locations are different from the first locations in the first direction L. As such, the locations of the second tunnels 22 are different from the first tunnels 21.

Preferably, the respective tunnels 22 have a longitudinal length which is about half a length of the ground floor 10 in the second direction T. Preferably, the second tunnels 22 have a longitudinal length which is arranged in an extension direction of the longitudinal length of the third tunnels 23. Preferably, the predetermined distance between the first locations 11 of first tunnels 21, which are adjacent to one another, is substantially the same to a width in the first direction L of the second tunnel 22, which is formed between the adjacent first tunnels 21. Preferably, the predetermined distance is between 200 mm and 600 mm in the first direction, preferably between 200 mm and 300 mm, more preferably about 250 mm.
Step S240 is providing an insulating material 30 in each of the second tunnels 22. The insulating material may be an insulating foam material, such as PUR foam, which is injected into the tunnel 22. Alternatively, the insulating material 30 may be any other suitable material. The insulating material inside the second tunnel 22 is provided to support the ground floor at the respective area part of the ground floor 12.
Step S240 may be performed after forming all tunnels in step S230. Alternatively, Steps S230 and S240 may be performed tunnelwise for each tunnel; thus step S240 after forming the respective tunnel according to step S230 and before forming another tunnel according to step S230.
Step S250 is the closing of the holes 132 of the front exterior wall 110, optionally including providing an insulating material inside a recess of the front exterior wall 110 near the location of the holes 132.

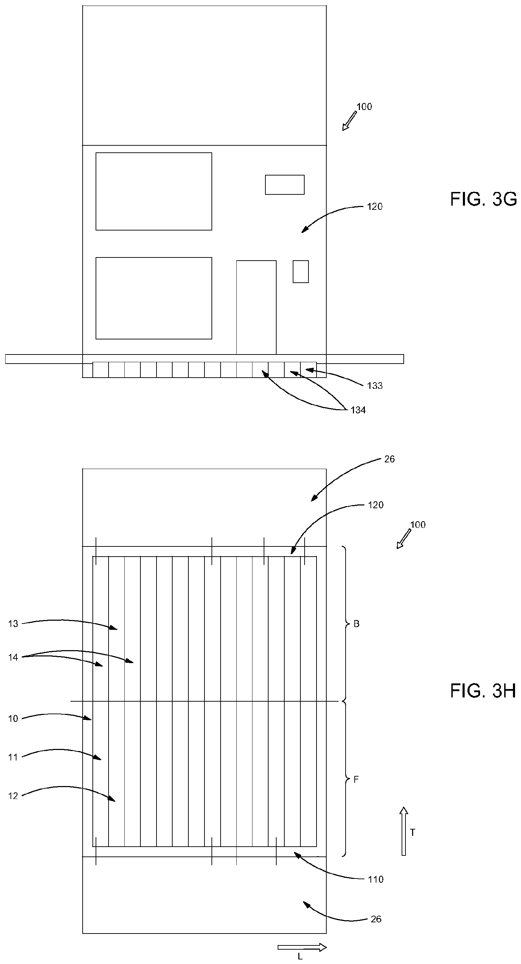

Step S320 is providing holes 134 in the back exterior wall 120 at selected locations to provide access to the soil below the ground floor 10, as shown in FIG. 3G. The holes 134 are spaced apart from each other in the first direction L at a predetermined distance. The holes 134 may have a size of about 400 mm in diameter. The holes 134 are at a different location then the holes 133 of step S120. Preferably, the holes 134 and the holes 133 are arranged in an alternating sequence to one another in the first direction L.
Step S330 is removing soil 20, which is arranged for supported the ground floor 10, at fourth locations below respective fourth area parts 14 of the ground floor, as shown in FIG. 3H, thereby forming a plurality of corresponding fourth tunnels 24. The fourth tunnels 24 are located below the ground floor 10 at the respective fourth area parts 14 of the ground floor. The fourth area parts 14, and the fourth tunnels 24, are spaced apart from each other in the first direction L at predetermined distance. The predetermined distance preferably corresponds to the predetermined distance between the holes 134. Preferably, the respective tunnels 24 are arranged substantially parallel to one another. The fourth locations are different from the third locations in the first direction L. As such, the locations of the fourth tunnels 24 are different from the third tunnels 23. Preferably, the respective tunnels 24 have a longitudinal length which is about half a length of the ground floor 10 in the second direction T. Preferably, the fourth tunnels 24 have a longitudinal length which is arranged in an extension direction of the longitudinal length of the first tunnels 21. Preferably, the predetermined distance between the third locations 13 of third tunnels 23, which are adjacent to one another, is substantially the same to a width in the first direction L of the fourth tunnel 24, which is formed between the adjacent third tunnels 23. Preferably, the predetermined distance is between 200 mm and 600 mm in the first direction, preferably between 200 mm and 300 mm, more preferably about 250 mm.
Step S340 is providing an insulating material 30 in each of the fourth tunnels 24. The insulating material may be an insulating foam material, such as PUR foam, which is injected into the tunnel 24. Alternatively, the insulating material 30 may be any other suitable material. The insulating material inside the fourth tunnel 24 is provided to support the ground floor at the respective area part of the ground floor 14.
Step S340 may be performed after forming all tunnels in step S330. Alternatively, Steps S330 and S340 may be performed tunnelwise for each tunnel; thus step S340 after forming the respective tunnel according to step S330 and before forming another tunnel according to step S330.
Step S350 is the closing of the holes 134 of the back exterior wall 120, optionally including providing an insulating material inside a recess of the back exterior wall 120 near the location of the holes 134.

In this embodiment, the first area parts 11 and the second area parts 12 together form a front side floor area F and the third area parts 13 and the fourth area parts 14 together form a back side floor area B, wherein the front side floor area F is arranged contiguous to the back side floor area B. The front side floor area F is arranged adjacent to a front exterior wall 110 and the back side floor area b is arranged adjacent to a back exterior wall 120.
In alternative embodiments, step S50 may be performed later during step S250 and step S150 may be performed later during step S350.

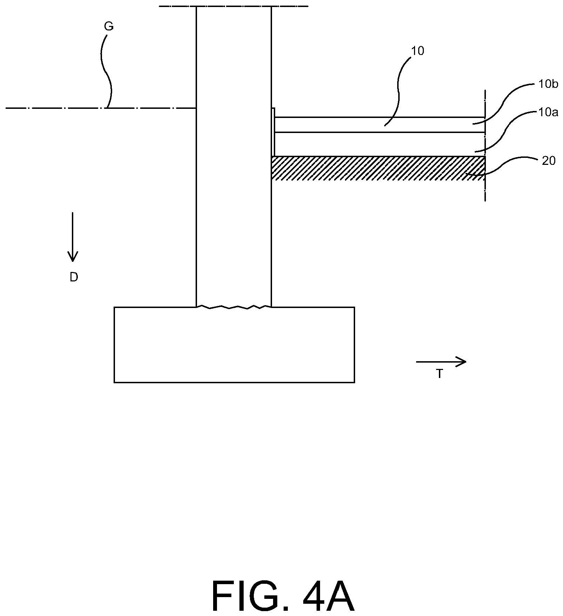

FIG. 4A illustrates schematically a detailed cross section view of the ground floor and an exterior wall in a first stage. The detailed cross section view shows a part of the front exterior wall 110 or the back exterior wall 120 and a part of the ground floor 10 along a height direction D and a second direction T. The ground floor 10 is arranged at ground level G in a height direction D and is supported on soil 20. In an embodiment, the ground floor 10 comprises a base layer 10a and a floor covering 10b. The base layer 10a may consist of concrete material. The floor covering 10b may comprise at least one of a wooden layer, a layer of tiles, a resilient floor layer, such as PVC layer, a casted polymer layer or a floor screed containing a cementitious material. The floor covering 10b is provided on top of the base layer 10a.

The building may loose considerable energy through its ground floor10 to the underlying soil 20, when the building is heated. Therefore, a desire exists to reduce energy loss of the building through its ground floor 10.

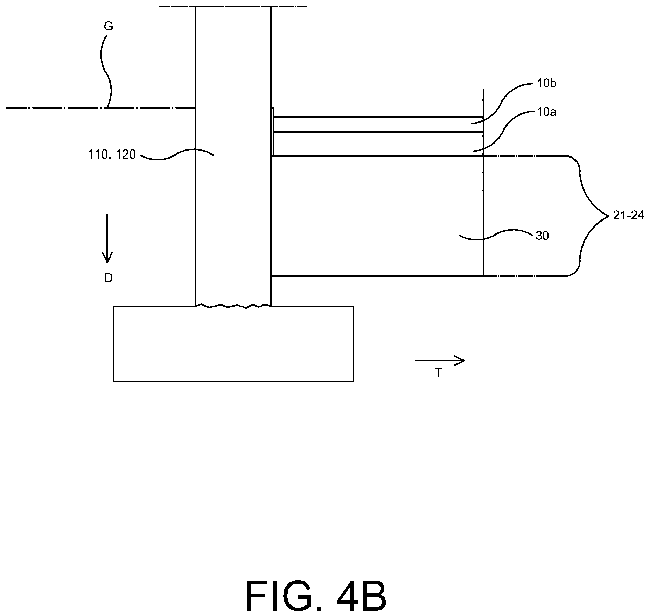

FIG. 4B illustrates schematically a detailed cross section view of the ground floor and an exterior wall in a second stage along a height direction D and a second direction T. In the second stage, an insulating material 30 is provided below the ground floor 10 at selected locations. The insulating material 30 is provided by first forming a respective tunnel 21 - 24 at the selected locations according to methods of the present invention. Preferably, each of the tunnels is arranged at a level (in the height direction D) arranged between the front exterior wall and the back exterior wall and the thermal insulating material is provided inside the tunnels at said level between the front exterior wall and the back exterior wall. Preferably, the insulating material 30 is provided substantially directly below the ground floor 10 at selected locations. The insulating material 30 may be a thermal insulating foam, such as a pressure resistant PUR foam material. The second stage may be obtained after respective steps S40, S140, S240 and S340 at the respective locations of these steps.

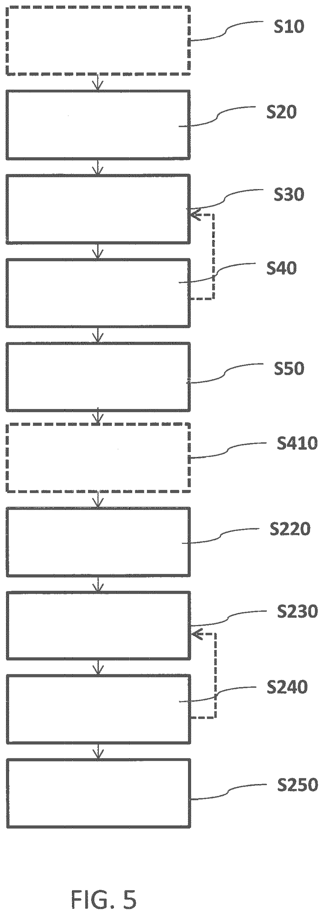

Figure 5 illustrates schematically another flow diagram of a method for insulating a ground floor of a building shown in FIG. 1A - 1C.
The method shown in FIG. 5 is a modified method of the method shown in FIG. 2. In the modified method, the ground floor 10 is merely divided in first area parts 10 and second area parts 20, as shown in FIG. 6. Each of the first area parts 11 and second area parts 12 extends between the front exterior wall 110 and the back exterior wall 120. The method comprises steps S10 - S50 and steps S220 - S250 as described for the flow diagram of FIG. 2. After the steps S10 - S50, the insulating material 30 is provided below the first area parts 11 and after the steps S220 - S250, the insulating material 30 is provided below the second area parts 12. The first area parts 11 and the second area parts 12 cooperatively extend over the whole ground floor 10 in both the first direction L and the second direction T.

In alternative embodiments, at least one of the series of steps S10 - S50 and S220 - S250 is performed by accessing the soil beneath the ground floor 10 from another exterior wall, such as the back exterior wall 120 or a side exterior wall 130, 140. In that case, the respective holes made in steps S20 and S220 are made in the respective exterior wall 120, 130, 140 to access the soil beneath the ground floor 10 from said other exterior wall 120, 130, 140.

Additionally, the method may comprise an optional step S410 of excavating a hole 26 adjacent to the respective exterior wall to provide access to the respective exterior wall below ground level G. Step 410 is optional. In case the exterior wall is already accessible below ground level G, the step S410 does not need to be performed. The hole 26 may be about 600 mm deep at the back exterior wall 120 and about 2000 mm in width.

In all of the embodiments described herein, said thermal insulating material may have a thermal conductivity lambda value λ which is determined in agreement to NEN 1068, and expressed in W.m-1.K-1, which is smaller than 0.200 W.m-1.K-1, preferably smaller than 0.100 W.m-1.K-1, more preferably in the range of 0.060 W.m-1.K-1 - 0.020 W.m-1.K-1. In a particular example, a polyurethane foam is used having a thermal conductivity lambda value λ of about 0.040 - 0.050.

In all of the embodiments described herein the soil may be controllably removed by using an installation comprising a ground suction device, such as a KOKS MegaVac installation. Any other suitable installation comprising a ground suction device may be used.

In all of the embodiments described herein the insulating material may be provided by injecting a foam material into the respective tunnel by using an Evolution G-30H hydraulic proportioning unit. In examples, a hydraulic proportioning unit or an air driven proportioning unit may be used. Any other installation for injecting a foam material into the respective tunnel may be used.

In all of the embodiments described herein the insulating material, in particular thermal insulating material, used may be a pressure resistant polyurethane (PUR) foam material under the name Elastospray ® supplied by BASF. The polyurethane foam has suitable low thermal conductivity properties expressed in lambda value and suitable compressive strength. Any other suitable thermal insulating material may be used.

It should be appreciated by those skilled in the art that any block diagrams herein represent conceptual views of illustrative units or modules embodying the principles of the invention.

Whilst the principles of the invention have been set out above in connection with specific embodiments, it is to be understood that this description is merely made by way of example and not as a limitation of the scope of protection which is determined by the appended claims.

## Claims

1. A method for insulating a ground floor (10) of a building (100), the ground floor (10) being supported on soil (20), the method comprising the steps of:
a. Removing soil (20), which is arranged for supporting the ground floor (10), at first locations below respective first area parts (11) of the ground floor, wherein the first area parts are spaced apart from one another in a first direction (L), thereby forming a plurality of first tunnels (21) below the ground floor;
b. Providing an insulating material (30) in each of the first tunnels (21);
c. Removing soil, which is arranged for supporting the ground floor, at second locations below respective second area parts (12) of the ground floor, wherein the second area parts are spaced apart from one another in the first direction (L), thereby forming a plurality of second tunnels (22) below the ground floor; wherein the second locations are different from the first locations in the first direction;
d. Providing an insulating material (30) in each of the second tunnels (22);
wherein the steps a. and b. are carried out before step c.

2. The method according to claim 1, wherein the insulating material (30) provided in the respective tunnel (21, 22) is arranged for supporting the ground floor at the respective location, wherein preferably the insulating material (30) substantially fills each of the respective tunnels (21, 22).

3. The method according to any one of the preceding claims, wherein the first tunnels (21) and the second tunnels (22) are extending in a second direction (T), which is substantially perpendicular to the first direction (L).

4. The method according to any one of the preceding claims, wherein the insulating material (30) is a thermal insulating material (30), wherein preferably the thermal insulating material (30) is arranged to extend over said respective area parts (11, 12).

5. The method according to any one of the preceding claims, wherein the first area parts (11) and the second area parts (12) are arranged contiguous to one another in the first direction.

6. The method according to any one of the preceding claims, further comprising the steps of:
e. Removing soil, which is arranged for supporting the ground floor, at third locations below respective third area parts (13) of the ground floor, wherein the third area parts are spaced apart from one another in the first direction, thereby forming a plurality of third tunnels (23) below the ground floor;
f. Providing an insulating material in each of the third tunnels (23);
g. Removing soil, which is arranged for supporting the ground floor, at fourth locations below respective fourth area parts (14) of the ground floor, wherein the fourth area parts are spaced apart from one another in the first direction, thereby forming a plurality of fourth tunnels (24) below the ground floor; wherein the third locations are different from the fourth locations in the first direction;
h. Providing an insulating material (30) in each of the fourth tunnels (24);
wherein the steps e. and f. are carried out before step g.

7. The method according to claim 6, wherein the third area parts and the fourth area parts are arranged contiguous to one another in the first direction.

8. The method according to claim 6 or 7, wherein the first area parts and the second area parts together form a front side floor area (F) and the third area parts and the fourth area parts together form a back side floor area (B), wherein the front side floor area (F) is arranged contiguous to the back side floor area (B).

9. The method according to any one of the claim 6 - 8, wherein each of the third tunnels (23) is arranged in an extension direction of the second tunnels (22) and each of the fourth tunnels (24) is arranged in an extension direction of the first tunnels (21).

10. The method according to any one of the claim 6 - 9, wherein the steps a. and b. are carried out before steps e. and f., which are carried out before steps c. and d., which are carried out before steps g. and h.

11. The method according to any one of the preceding claims, wherein the building has a front exterior wall (110) and a back exterior wall (120), the ground floor extending between the front exterior wall and the back exterior wall in a second direction (T), which is substantially perpendicular to the first direction, wherein the method further comprises the steps of providing holes (130, 131, 132, 133, 134) in the front exterior wall and / or the back exterior wall at predetermined locations to provide access to the soil, which is arranged for supporting the ground floor, at respective locations below corresponding first area parts (11) and second area parts (12), optionally including respective locations below corresponding third area parts (13) and fourth area parts (14), of the ground floor (10).

12. The method according to claim 11, wherein the tunnel is formed by moving a ground suction hose of a ground suction device though a respective hole (130 - 134) of the front exterior wall or the back exterior wall and moving the ground suction hose beneath the ground floor along a second direction (T), perpendicular to the first direction, while the ground suction device is arranged for removing soil.

13. The method according to claim 11 or claim 12, the method further comprises at least one of the steps of excavating a hole (26) adjacent to the front exterior wall to provide access to the front exterior wall below the ground level and excavating a hole (26) adjacent to the back exterior wall to provide access to the back exterior wall below the ground level.

14. The method according to any one of the preceding claims, wherein the soil is removed at the respective locations by using a ground suction device.

15. The method according to any one of the preceding claims, wherein the insulating material is provided by injecting a foam material into the respective tunnel.

## Patentansprüche

1. Verfahren zum Isolieren eines Erdgeschosses (10) eines Gebäudes (100), wobei das Erdgeschoss (10) auf der Erde (20) getragen wird, wobei das Verfahren die Schritte aufweist:
a. Entfernen von Erde (20), die angeordnet ist, um das Erdgeschoss (10) zu tragen, an ersten Positionen unter jeweiligen ersten Flächenteilen (11) des Erdgeschosses, wobei die ersten Flächenteile voneinander in einer ersten Richtung (L) beabstandet sind, wodurch eine Vielzahl von ersten Tunneln (21) unter dem Erdgeschoss ausgebildet wird;
b. Vorsehen eines Isolationsmaterials (30) in einem jeden von den ersten Tunneln (21);
c. Entfernen von Erde, die angeordnet ist, um das Erdgeschoss zu tragen, an zweiten Positionen unter jeweiligen zweiten Flächenteilen (12) des Erdgeschosses, wobei die zweiten Flächenteile voneinander in der ersten Richtung (L) beabstandet sind, wodurch eine Vielzahl von zweiten Tunneln (22) unter dem Erdgeschoss ausgebildet wird; wobei sich die zweiten Positionen von den ersten Positionen in der ersten Richtung unterscheiden;
d. Vorsehen eines Isolationsmaterials (30) in einem jeden von den zweiten Tunneln (22);
wobei die Schritte a. und b. vor Schritt c. ausgeführt werden.

2. Verfahren nach Anspruch 1, wobei das in dem jeweiligen Tunnel (21, 22) vorgesehene Isolationsmaterial (30) zum Tragen des Erdgeschosses an der jeweiligen Position angeordnet ist, wobei das Isolationsmaterial (30) vorzugsweise im Wesentlichen einen jeden von den jeweiligen Tunneln (21, 22) füllt.

3. Verfahren nach einem der vorhergehenden Ansprüche, wobei die ersten Tunnel (21) und die zweiten Tunnel (22) in einer zweiten Richtung (T) verlaufen, die im Wesentlichen senkrecht zur ersten Richtung (L) ist.

4. Verfahren nach einem der vorhergehenden Ansprüche, wobei das Isolationsmaterial (30) ein Thermoisolationsmaterial (30) ist, wobei vorzugsweise das Thermoisolationsmaterial (30) angeordnet ist, um über die jeweiligen Flächenteile (11, 12) zu verlaufen.

5. Verfahren nach einem der vorhergehenden Ansprüche, wobei die ersten Flächenteile (11) und die zweiten Flächenteile (12) fortlaufend zueinander in der ersten Richtung angeordnet sind.

6. Verfahren nach einem der vorhergehenden Ansprüche, das weiterhin die Schritte aufweist:
e. Entfernen von Erde, die angeordnet ist, um das Erdgeschoss zu tragen, an dritten Positionen unter jeweiligen dritten Flächenteilen (13) des Erdgeschosses, wobei die dritten Flächenteile voneinander in der ersten Richtung beabstandet sind, wodurch eine Vielzahl von dritten Tunneln (23) unter dem Erdgeschoss ausgebildet wird;
f. Vorsehen eines Isolationsmaterials in einem jeden von den dritten Tunneln (23);
g. Entfernen von Erde, die angeordnet ist, um das Erdgeschoss zu tragen, an vierten Positionen unter jeweiligen vierten Flächenteilen (14) des Erdgeschosses, wobei die vierten Flächenteile voneinander in der ersten Richtung beabstandet sind, wodurch eine Vielzahl von vierten Tunneln (24) unter dem Erdgeschoss ausgebildet wird;
wobei sich die dritten Positionen von den vierten Positionen in der ersten Richtung unterscheiden;
h. Vorsehen eines Isolationsmaterials (30) in einem jeden von den vierten Tunneln (24);
wobei die Schritte e. und f. vor Schritt g. ausgeführt werden.

7. Verfahren nach Anspruch 6, wobei die dritten Flächenteile und die vierten Flächenteile fortlaufend zueinander in der ersten Richtung angeordnet sind.

8. Verfahren nach Anspruch 6 oder 7, wobei die ersten Flächenteile und die zweiten Flächenteile zusammen eine vordere Bodenfläche (F) bilden und die dritten Flächenteile und die vierten Flächenteile zusammen eine hintere Bodenfläche (B) bilden, wobei die vordere Bodenfläche (F) fortlaufend zur hinteren Bodenfläche (B) angeordnet ist.

9. Verfahren nach einem der Ansprüche 6 bis 8, wobei ein jeder von den dritten Tunneln (23) in einer Verlaufsrichtung der zweiten Tunnel (22) angeordnet ist, und ein jeder von den vierten Tunneln (24) in einer Verlaufsrichtung der ersten Tunnel (21) angeordnet ist.

10. Verfahren nach einem von dem Anspruch 6 bis 9, wobei die Schritte a. und b. vor den Schritten e. und f. ausgeführt werden, die vor den Schritten c. und d. ausgeführt werden, die vor den Schritten g. und h. ausgeführt werden.

11. Verfahren nach einem der vorhergehenden Ansprüche, wobei das Gebäude eine vordere Außenwand (110) und eine hintere Außenwand (120) aufweist, wobei das Erdgeschoss zwischen der vorderen Außenwand und der hinteren Außenwand in einer zweiten Richtung (T) verläuft, die im Wesentlichen senkrecht zu der ersten Richtung ist, wobei das Verfahren weiterhin die Schritte des Vorsehens von Löchern (130, 131, 132, 133, 134) in der vorderen Außenwand und/oder der hinteren Außenwand an vorbestimmten Positionen aufweist, um Zugriff auf die Erde, die zum Tragen des Erdgeschosses angeordnet ist, an jeweiligen Positionen unter entsprechenden ersten Flächenteilen (11) und zweiten Flächenteilen (12), optional jeweilige Positionen unter entsprechenden dritten Flächenteilen (13) und vierten Flächenteilen (14) aufweisend, des Erdgeschosses (10) vorzusehen.

12. Verfahren nach Anspruch 11, wobei der Tunnel ausgebildet ist, indem ein Bodenansaugschlauch einer Bodenansaugvorrichtung durch ein jeweiliges Loch (130 - 134) der vorderen Außenwand oder der hinteren Außenwand ausgebildet ist, und der Bodenansaugschlauch unter dem Erdgeschoss entlang einer zweiten Richtung (T) senkrecht zur ersten Richtung bewegt wird, während die Bodenansaugvorrichtung angeordnet ist, um Erde zu entfernen.

13. Verfahren nach Anspruch 11 oder 12, wobei das Verfahren weiterhin aufweist wenigstens einen von den Schritten des Ausgrabens eines Lochs (26) angrenzend an die vordere Außenwand, um Zugriff auf die vordere Außenwand unter dem Bodenniveau vorzusehen, und des Ausgrabens eines Lochs (26) benachbart zu der hinteren Außenwand, um Zugriff auf die hintere Außenwand unter dem Bodenniveau vorzusehen.

14. Verfahren nach einem der vorhergehenden Ansprüche, wobei die Erde an jeweiligen Positionen unter Verwendung einer Bodenansaugvorrichtung entfernt wird.

15. Verfahren nach einem der vorhergehenden Ansprüche, wobei das Isolationsmaterial vorgesehen wird, indem ein Schaummaterial in den jeweiligen Tunnel eingespritzt wird.

## Revendications

1. Procédé d'isolation d'un plancher de rez-de-chaussée (10) d'un bâtiment (100), le plancher de rez-de-chaussée (10) étant supporté par le sol (20), le procédé comprenant les étapes de :
a. extraction du sol (20), qui est situé de manière à supporter le plancher de rez-de-chaussée (10), au niveau de premiers emplacements au-dessous de premières parties de surface respectives (11) du plancher de rez-de-chaussée, dans lequel les premières parties de surface sont espacées les unes des autres dans une première direction (L), formant ainsi une pluralité de premiers tunnels (21) au-dessous du plancher de rez-de-chaussée ;
b. introduction d'un matériau isolant (30) dans chacun des premiers tunnels (21) ;
c. extraction du sol, qui est situé de manière à supporter le plancher de rez-de-chaussée, au niveau de deuxièmes emplacements au-dessous des deuxièmes parties de surface respectives (12) du plancher de rez-de-chaussée, dans lequel les deuxièmes parties de surface sont espacées les unes des autres dans la première direction (L), formant ainsi une pluralité de deuxièmes tunnels (22) au-dessous du plancher de rez-de-chaussée ; dans lequel les deuxièmes emplacements sont différents des premiers emplacements dans la première direction ;
d. introduction d'un matériau isolant (30) dans chacun des deuxièmes tunnels (22) ; dans lequel les étapes a. et b. sont réalisées avant l'étape c.

2. Procédé selon la revendication 1, dans lequel le matériau isolant (30) introduit dans le tunnel respectif (21, 22) est agencé de manière à supporter le plancher de rez-de-chaussée à l'emplacement respectif, dans lequel, de préférence, le matériau isolant (30) remplit sensiblement chacun des tunnels respectifs (21, 22).

3. Procédé selon l'une quelconque des revendications précédentes, dans lequel les premiers tunnels (21) et les deuxièmes tunnels (22) s'étendent dans une seconde direction (T), qui est sensiblement perpendiculaire à la première direction (L).

4. Procédé selon l'une quelconque des revendications précédentes, dans lequel le matériau isolant (30) est un matériau thermiquement isolant (30), dans lequel, de préférence, le matériau thermiquement isolant (30) est agencé afin de s'étendre au-dessus desdites parties de surface respectives (11, 12).

5. Procédé selon l'une quelconque des revendications précédentes, dans lequel les premières parties de surface (11) et les deuxièmes parties de surface (12) sont agencées de manière contiguë les unes par rapport aux autres dans la première direction.

6. Procédé selon l'une quelconque des revendications précédentes, comprenant, en outre, les étapes de :
e. extraction du sol, qui est agencé de manière à supporter le plancher de rez-de-chaussée au niveau de troisièmes emplacements au-dessous de troisièmes parties de surface respectives (13) du plancher de rez-de-chaussée, dans lequel les troisièmes parties de surface sont espacées les unes des autres dans la première direction, formant ainsi une pluralité de troisièmes tunnels (23) au-dessous du plancher de rez-de-chaussée ;
f. introduction d'un matériau isolant dans chacun des troisièmes tunnels (23) ;
g. extraction du sol, qui est agencé de manière à supporter le plancher de rez-de-chaussée au niveau de quatrièmes emplacements au-dessous de quatrièmes parties de surface respectives (14) du plancher de rez-de-chaussée, dans lequel les quatrièmes parties de surface sont espacées les unes des autres dans la première direction, formant ainsi une pluralité de quatrièmes tunnels (24) au-dessous du plancher de rez-de-chaussée ; dans lequel les troisièmes emplacements sont différents des quatrièmes emplacements dans la première direction ;
h. introduction d'un matériau isolant (30) dans chacun des quatrièmes tunnels (24) ;
dans lequel les étapes e. et f. sont réalisées avant l'étape g..

7. Procédé selon la revendication 6, dans lequel les troisièmes parties de surface et les quatrièmes parties de surface sont agencées de manière contiguë les unes par rapport aux autres dans la première direction.

8. Procédé selon la revendication 6 ou 7, dans lequel les premières parties de surface et les deuxièmes parties de surface forment ensemble une surface de plancher de face avant (F) et les troisièmes parties de surface et les quatrième parties de surface forment ensemble une surface de plancher de face arrière (B), dans lequel la surface de plancher de face avant (F) est agencée de manière contiguë par rapport à la surface de plancher de face arrière (B).

9. Procédé selon l'une quelconque des revendications 6 à 8, dans lequel chacun des troisièmes tunnels (23) est agencé dans une direction d'extension des deuxièmes tunnels (22) et chacun des quatrièmes tunnels (24) est agencé dans une direction d'extension des premiers tunnels (21).

10. Procédé selon l'une quelconque des revendications 6 à 9, dans lequel les étapes a. et b. sont réalisées avant les étapes e. et f., qui sont réalisées avant les étapes c. et d., qui sont réalisées avant les étapes g. et h.

11. Procédé selon l'une quelconque des revendications précédentes, dans lequel le bâtiment présente une paroi extérieure avant (110) et une paroi extérieure arrière (120), le plancher de rez-de-chaussée s'étendant entre la paroi extérieure avant et la paroi extérieure arrière dans une seconde direction (T), qui est sensiblement perpendiculaire à la première direction, dans lequel le procédé comprend, en outre, les étapes de formation d'orifices (130, 131, 132, 133, 134) dans la paroi extérieure avant et/ou la paroi extérieure arrière à des emplacements prédéterminés afin d'assurer l'accès au sol, qui est agencé de manière à supporter le plancher de rez-de-chaussée, à des emplacements respectifs au-dessous de premières parties de surface (11) et de deuxièmes parties de surface (12) correspondantes, comportant, en variante, des emplacements respectifs au-dessous de troisièmes parties de surface (13) et de quatrièmes parties de surface (14) correspondantes, du plancher de rez-de-chaussée (10).

12. Procédé selon la revendication 11, dans lequel le tunnel est formé en déplaçant un tuyau d'aspiration de sol d'un dispositif d'aspiration de sol à travers un orifice respectif (130 - 134) de la paroi extérieure avant ou la paroi extérieure arrière et le déplacement du tuyau d'aspiration de sol au-dessous du plancher de rez-de-chaussée suivant une seconde direction (T), perpendiculaire à la première direction, alors que le dispositif d'aspiration de sol est agencé de manière à extraire le sol.

13. Procédé selon la revendication 11 ou 12, le procédé comprend, en outre, au moins une des étapes d'excavation d'un orifice (26) de manière adjacente à la paroi extérieure avant afin d'assurer l'accès à la paroi extérieure avant au-dessous du niveau du sol et d'excavation d'un orifice (26) de manière adjacente à la paroi extérieure arrière afin d'assurer l'accès à la paroi extérieure arrière au-dessous du niveau du sol.

14. Procédé selon l'une quelconque des revendications précédentes, dans lequel le sol est extrait à des emplacements respectifs en utilisant un dispositif d'aspiration de sol.

15. Procédé selon l'une quelconque des revendications précédentes, dans lequel le matériau isolant est introduit par injection d'un matériau en mousse dans le tunnel respectif.
